**Europäisches Patentamt**

**European Patent Office**

**Office européen des brevets**

(19)

(11) Veröffentlichungsnummer : **0 391 446 B1**

(12)

# EUROPÄISCHE PATENTSCHRIFT

(45) Veröffentlichungstag der Patentschrift :
**16.09.92 Patentblatt 92/38**

(51) Int. Cl.⁵ : **B23H 1/00**, A61C 13/00

(21) Anmeldenummer : **90106704.1**

(22) Anmeldetag : **07.04.90**

(54) **Vorrichtung zur Funkenerosionsbearbeitung eines oder mehrerer Rohlinge.**

(30) Priorität : **07.04.89 DE 3911362**

(43) Veröffentlichungstag der Anmeldung :
**10.10.90 Patentblatt 90/41**

(45) Bekanntmachung des Hinweises auf die
Patenterteilung :
**16.09.92 Patentblatt 92/38**

(84) Benannte Vertragsstaaten :
**AT BE CH DE DK ES FR GB GR IT LI LU NL SE**

(56) Entgegenhaltungen :
**DE-A- 3 544 123**
**Patent Abstract of Japan, unexamined appli-**
**cations, M Sektion, Band 12, Nr. 236, 06.07.88**
**Patent Abstracts of Japan, unexamined appli-**
**cations, M Sektion, Band 11, Nr. 86, 17.03.87**

(73) Patentinhaber : **Krupp Medizintechnik GmbH**
**Harkortstr. 65**
**W-4300 Essen 1 (DE)**

(72) Erfinder : **Walter, Herbert**
**Jockelsberg 4**
**W-7239 Fluorn-Winzeln (DE)**
Erfinder : **Gentischer, Josef**
**Weinbergweg 31**
**W-7064 Remshalden (DE)**
Erfinder : **Lehner, Rolf**
**Brühlstrasse 19**
**W-7300 Esslingen-Berkheim (DE)**

(74) Vertreter : **Vomberg, Friedhelm, Dipl.-Phys.**
**Schulstrasse 8**
**W-5650 Solingen 1 (DE)**

EP 0 391 446 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft eine Vorrichtung zur Funkenerosionsbearbeitung der im Oberbegriff des Anspruchs 1 genannten Art. Insbesondere ist sie geeignet für eine Senkerodieranlage, bei welcher zwei Formelektroden gegen einen Rohling bzw. ein Rohlingspaar verfahren werden.

Die funkenerosive Bearbeitung von Rohlingen mittels herkömmlicher, hochpräziser Funkenerosionsmaschinen, bei welchen die Bearbeitungselektrode in allen drei Koordinatenrichtungen gesteuert verfahrbar ist, ist dann unwirtschaftlich, wenn die vorzugsweise als Formelektrode ausgebildete Bearbeitungselektrode lediglich gegen den Rohling in einer Richtung zu verfahren ist. Lange Bearbeitungszeiten ergeben sich außerdem, wenn mehrere Rohlinge nacheinander in dieser Art zu bearbeiten sind.

Diese Aufgabe stellt sich zum Beispiel bei Durchführung des Verfahrens nach dem deutschen Patent 35 44 123, bei welchem Zahnersatzteile mit Hilfe von gegeneinander verfahrbaren Elektroden herzustellen sind.

Ähnliche Probleme stellen sich bei Herstellung anderer Kleinteile.

Zur Rationalisierung eines derartigen Fertigungsprozesses wird mit vorliegender Erfindung eine Vorrichtung mit den Merkmalen des Anspruchs 1 vorgeschlagen.

Da in einem Magazin exakt geführte Elektroden den verschiedenen Rohlingen bereits zugeordnet sind und dieses Magazin erst nach erfolgter Bestückung in das Dielektrikum der Funkenerosionsmaschine eingesetzt wird, sind die sonstigen Genauigkeitsanforderungen an die Funkenerosionsmaschine außerordentlich gering.

Diese Vorrichtung eignet sich vor allem zur Herstellung von Einzelteilen, die voneinander abweichen, wie z.B. sehr individuellem Zahnersatz, also auch für handwerklich orientierte Betriebe.

Da der Rohlings- und Elektrodenwechsel außerhalb der Funkenerosionsmaschine erfolgt, sind die Standzeiten der Vorrichtung sehr gering. Auf eine automatische Zufuhr von Elektroden und Rohlingen kann ganz verzichtet werden. Da die Ausbildung des Magazins selbst eine exakte Elektrodenführung gewährleistet, gestaltet sich der Magazinwechsel problemlos. Außerdem ist der Antrieb, da nur zwei Fahrachsen erforderlich sind, einfach.

Die Rohlinge können gleichzeitig von beiden Seiten bis zum vollständigen Zusammenfahren der Elektroden bearbeitet werden.

Die Erfindung weiterbildende Merkmale sind mit den Unteransprüchen angegeben.

Im übrigen ist der Gegenstand der Erfindung nachstehend anhand von bevorzugten Ausführungsbeispielen, die in den Zeichnungen dargestellt sind, im einzelnen erläutert. In den Zeichnungen zeigen:

Figur 1 perspektivische Darstellung der erfindungsgemäßen Vorrichtung,

Figur 2 Aufsicht auf eine geringfügig abgewandelte Vorrichtung gemäß Figur 1,

Figur 3 Querschnitt längs der Linie III-III in Figur 1,

Figur 4 Querschnitt längs der Linie IV-IV in Figur 2,

Figur 5 vergrößerter Querschnitt des Magazins mit Elektroden und Rohling,

Figur 5 A perspektivische Darstellung eines Rohlings,

Figur 6 vergrößerter Querschnitt des Magazins mit Elektroden und Rohlingen nach einem anderen Ausführungsbeispiel,

Figur 6 A perspektivische Darstellung der Rohlinge gemäß Figur 6,

Figur 7 - 9 perspektivische Teildarstellungen eines in den Träger eingespannten Rohlings und der zugehörigen Elektroden in drei verschiedenen Bearbeitungsphasen.

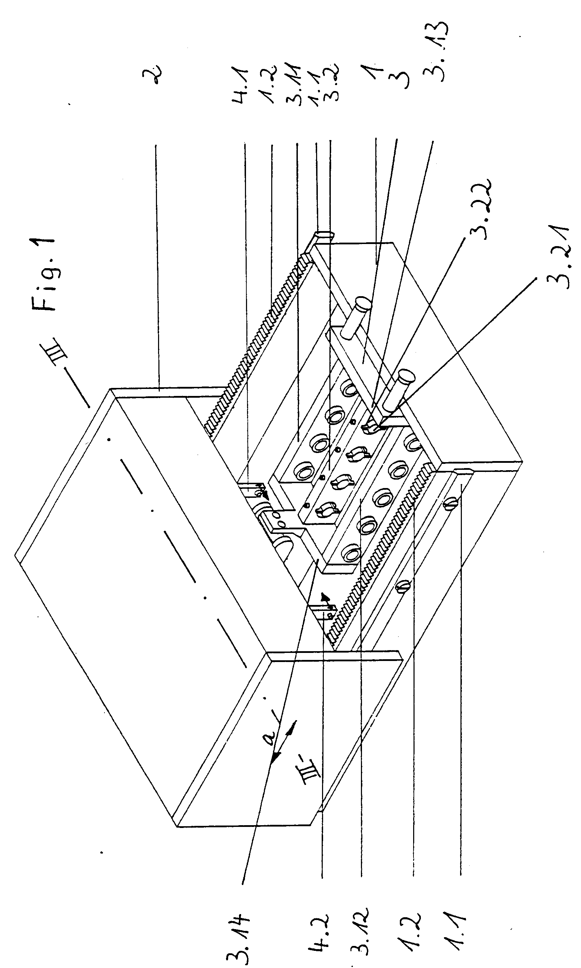

Die erfindungsgemäße Vorrichtung besteht im wesentlichen aus einem Grundgestell 1, an welchem seitlich Führungselemente 1.1 und Zahnstangen 1.2 befestigt sind. Die Führungselemente 1.1 tragen ein Portal 2. In aus Figur 1 nicht ersichtlicher Weise ist das Portal 2 mittels eines Elektromotors und eines Getriebes, dessen Ritzel in die Zahnstangen 1.2 eingreift, in Richtung des Doppelpfeiles a verfahrbar.

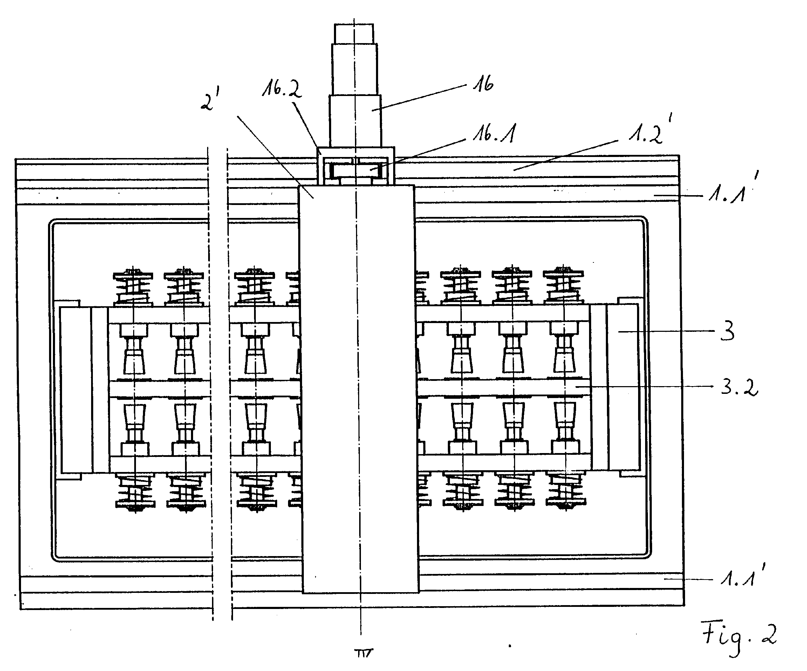

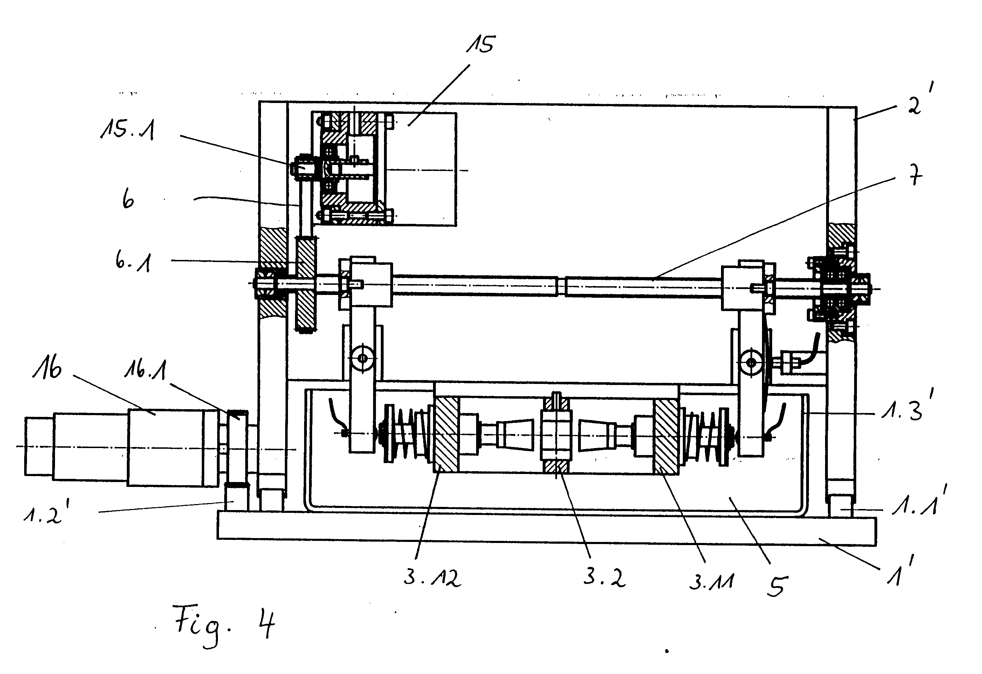

Bei einem zweiten aus den Figuren 2 und 4 erkennbaren Ausführungsbeispiel ist zum Antrieb des Portals 2′ ein über eine Brücke 16.2 mit dem Portal 2′ verbundener Elektromotor 16 vorgesehen, dessen Antriebsritzel 16.1 in die Zahnstange 1.2′ eingreift, die am Grundgestell 1′ angebracht ist.

In das Grundgestell 1 ist ein Rohlingsmagazin 3 eingehängt und an diesem arretiert. Das Rohlingsmagazin 3 weist seitliche Elektrodenträger 3.11 und 3.12 für n Erodierdorne und einen mittleren Rohlingsträger 3.2 für n Rohlinge auf.

Innerhalb des Portals 2 ist ein zweiter Antriebsmotor vorgesehen, der über eine Gewindespindel 7 mit gegenläufigen Gewindegängen 7.1, 7.2 die Antriebs- und Kontakthebel 4.1 und 4.2 gegenläufig antreibt (vgl. hierzu Figur 2). In nachstehend noch erläuterter Weise wirken diese Antriebs- und Kontakthebel 4.1 und 4.2 je nach Stellung des Portales 2 nacheinander auf die n Erodierdorne.

Das Grundgestell 1 ist gleichzeitig als Wanne für das Dielektrikum 5 ausgebildet, oder es ist eine gesonderte Wanne 1.3′ mit dem Grundgestell 1′ verbunden, wie das Ausführungsbeispiel gemäß Figur 4 zeigt.

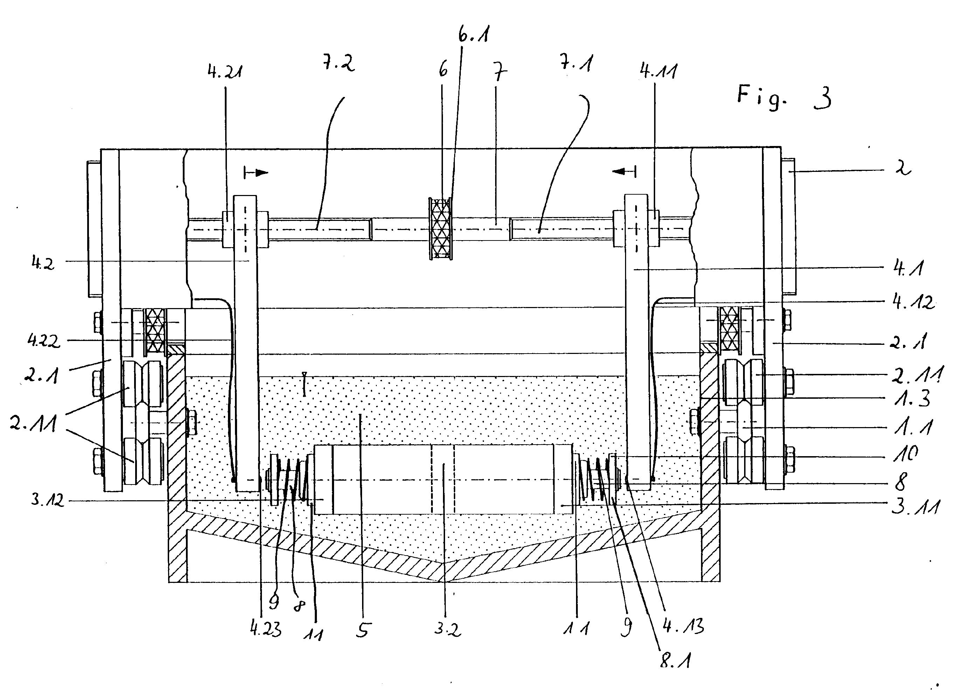

Wie Figur 3 im einzelnen erkennen läßt, wird die Spindel 7 mittels eines Zahnriemenantriebes, der aus einem auf der Spindel 7 drehfest sitzenden Zahnrad 6.1 und einem Zahnriemen 6 besteht, von dem in Figur 4 mit 15 bezeichneten Antriebsmotor bzw. dessen Ritzel 15.1 angetrieben. Die Antriebs-und Kontakthebel 4.1 und 4.2 sitzen mit Spindelmuttern 4.11 und 4.21 auf der Spindel 7 und sind in Längsrichtung von einer nicht dargestellten Linearführung geführt. In die Elektrodenträger 3.11 und 3.12 sind n Erodierdorne 8 eingesetzt. Sie sind verdrehgesichert in Buchsen 11 präzise geführt. Durch eine Rückstellfeder 9, die sich an der mit dem Erodierdorn 8 verbundenen Scheibe 10 abstützt, werden die Dorne 8 in ihrer Ausgangslage gehalten bzw. in diese wieder zurückgeführt.

Bei Antrieb der Spindel 7 werden die Kontakthebel 4.1 und 4.2 gegeneinander gefahren, bis sie die Erodierdorne 8 über die Anschlußdrähte 4.12 und 4.22 sowie über die isoliert eingedrückten Kontaktnippel 4.13 und 4.23 kontaktieren und schließlich gegen die Wirkung der Federn 9 gegeneinander verfahren. Aus den Figuren 2 und 4 ist außerdem erkennbar, daß das Magazin 3 mit den Trägern 3.11, 3.12 und 3.2 sich im Dielektrikum 5 innerhalb der Wanne 1.3 bzw. 1.3′ des Grundgestells 1 bzw. 1′ befindet.

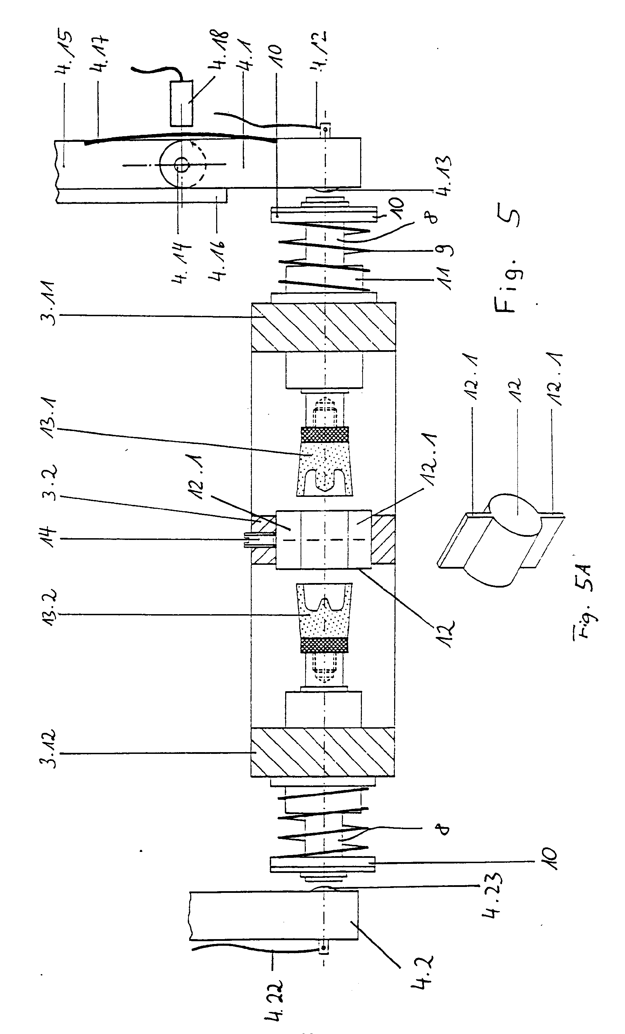

Anhand der Figuren 5 bis 9 ist nachstehend der mit der erfindungsgemäßen Vorrichtung mögliche Erodiervorgang erläutert.

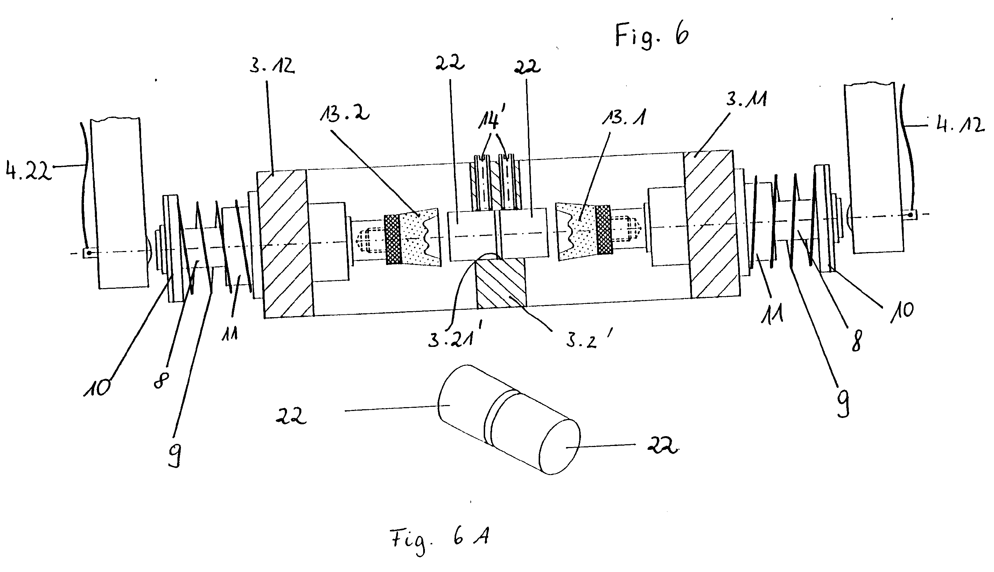

Anders als bei herkömmlichen Erodiermaschinen sind die Erodierdorne 8 in einem wechselbaren Magazin 3 in der gleichen Anzahl wie die n Rohlinge 12 vorgesehen (vgl. Figur 5 bzw. 6). Soweit es sich um ein Formteil handelt, das von zwei Seiten gleichzeitig zu bearbeiten ist, sind die Erodierdorne in doppelter Anzahl vorgesehen (vgl. Figur 5). In diesem Fall muß der Rohling, wie Figur 5 A zeigt, anders als der Rohling gemäß Figur 6 A mit Halteschwertern 12.1 und 12.2 versehen sein.

Diese Halteschwerter verhindern, daß beim vollständigen oder teilweisen Zusammenfahren der Formelektroden 13.1 und 13.2 der Rohling aus dem Träger 3.2 herausfällt. Der Träger 3.2 weist darum den Schwertern 12.1 und 12.2 entsprechende Schlitze 3.22 (vgl. Figur 1) auf. Außerdem ist der Rohling 12 mittels einer Schraube 14 am Träger 3.2 festgelegt.

Das Festlegen des Rohlings kann mittels einer geeigneten Hilfsvorrichtung außerhalb der erfindungsgemäßen Vorrichtung derart erfolgen, daß die Bearbeitungselektroden 13.1 und 13.2 im gleichen Maße seitlich herangefahren werden. Hier-durch ist sichergestellt, daß bei der Bearbeitung die Elektroden gleichzeitig den Rohling bearbeiten.

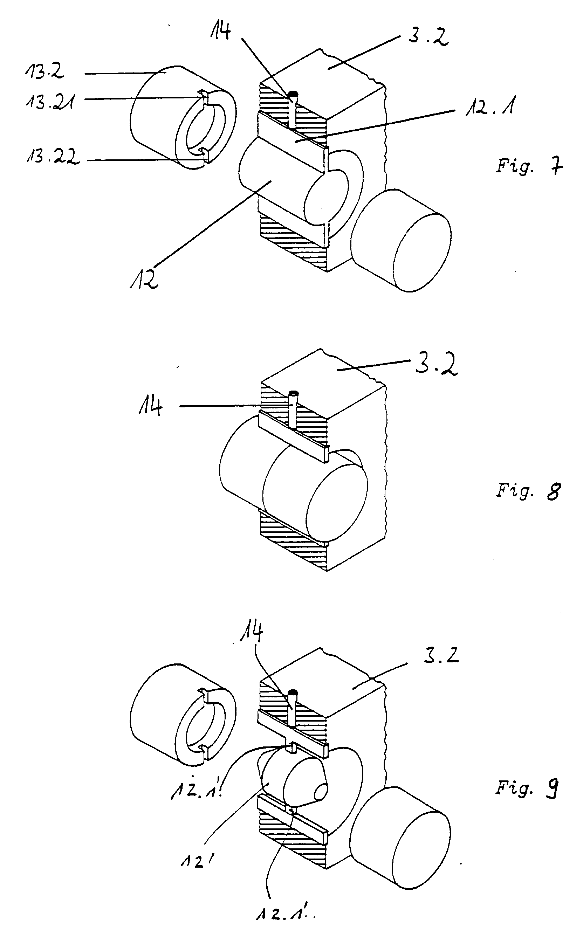

Wie Figur 7 veranschaulicht, ist bei einer derartigen Ausbildung die Elektrode 13.2 mit den Schwertern 12.1 entsprechenden Kerben 13.21 und 13.22 versehen, so daß, wie Figur 9 veranschaulicht, immer noch den bearbeiteten Rohling 12′ im Halter 3.2 tragende Stege 12.1′ bleiben. Eine derartige Bearbeitungsweise kann zum Beispiel bei der Zahnersatzherstellung mittels eines Funkenerosionsverfahrens zweckkmäßig sein.

Mit Figur 6 ist dagegen eine Anordnung gezeigt, bei welcher zwei voneinander unabhängige Rohlinge 22, welche in den Träger 3.2′ mit Schrauben 14′ eingespannt sind, gleichzeitig mit zwei unabhängigen aber hubgleichen Formelektroden 13.1 und 13.2 bearbeitet werden.

Figur 6 A zeigt die beiden noch nicht bearbeiteten Rohlinge 22 in perspektivischer Darstellung.

Für die Beendigung des Bearbeitungsvorgangs ist es wichtig, daß der Vorschub der Elektroden unterbrochen wird, wenn die Rohlinge vollständig bearbeitet sind, also die Elektroden ihre Endlage erreicht haben, bei der Anordnung gemäß Figur 5 also ganz gegeneinander gefahren sind.

Zur Erkennung des Hubendes ist folgende in Figur 5 dargestellte Anordnung vorgesehen. Der Kontaktarm 4.1 ist über das Drehgelenk 4.14 mit dem Armoberteil 4.15 schwenkbar verbunden. Eine Blattfeder 4.17 drückt den Arm 4.1 innen gegen einen Anschlag 4.16. Sobald die Elektroden zwangsweise über die gegenläufige Gewindespindel 7 aufeinandertreffen, wird der Arm 4.1 gegen die Kraft der Blattfeder 4.17 ausgelenkt und betätigt hierbei den Sensor 4.18. Dieser Sensor erzeugt ein Signal, welches den Antrieb für die Spindel 7 zur Bewegungsumkehr der Kontaktarme 4.15 und 4.2 erzeugt.

Anstelle des gemeinsamen Antriebes für die Kontaktarme 4.1 und 4.2 können erforderlichenfalls auch voneinander unabhängige Antriebe mit gegebenenfalls anderen Antriebselementen vorgesehen sein.

Nach einem weiteren Vorschlag sind den Erodierdornen Kodierelemente, z.B. Kodierstifte zugeordnet, welche zur Erkennung der einzelnen Bearbeitungsstationen von Sensoren abgetastet werden können. Diese Kodierstifte können z.B. entweder an den Elektrodenträgern 3.11 oder 3.12 des Magazins 3 oder am Grundgestell 1 in Nachbarschaft der Führungslemente 1.1 angeordnet sein.

**Figurenlegende**

| | |
|---|---|
| 1, 1′ | Grundgestell |
| 1.1, 1.1′ | Führungselemente, z.B. Schienen |
| 1.2, 1.2′ | Zahnstangen |
| 1.3, 1.3′ | Wanne |
| 2 | Portal |

| | |
|---|---|
| 2.1 | Stützen |
| 2.11 | Rollen |
| 3 | Rohlingsmagazin |
| 3.11, 3.12 | Elektrodenträger |
| 3.13, 3.14 | Querträger |
| 3.2, 3,2′ | Rohlingsträger |
| 3.21, 3.21′ | Querbohrungen |
| 3.22 | Schlitze |
| 4.1, 4.2 | Antriebs- und Kontakthebel |
| 4.11, 4.21 | Spindelmuttern |
| 4.12, 4.22 | Anschlußdrähte |
| 4. 13, 4.23 | Kontaktnippel |
| 4.14 | Drehgelenk |
| 4.15 | Armoberteil |
| 4.16 | Anschlag |
| 4.17 | Blattfeder |
| 4.18 | Sensor |
| 5 | Dielektrikum (dielektrische Flüssigkeit) |
| 6 | Zahnriemen |
| 6.1 | Zahnrad |
| 7 | Spindel |
| 7.1, 7.2 | Gewindegänge |
| 8 | Erodierdorn |
| 9 | Rückstellfeder |
| 10 | Scheibe |
| 11 | Lagerbuchse |
| 12; 22 | Rohling |
| 2.1 | Halteschwerter |
| 12′ | bearbeiteter Rohling |
| 12.1′ | Halteschwerter des bearbeiteten Rohlings |
| 13.1, 13.2 | Formelektroden |
| 13.21; 13.22 | Kerben |
| 14, 14′ | Schraube |
| 15 | Motor |
| 16 | Antriebsmotor |
| 16.1 | Motorritzel |
| 16.2 | Brücke |
| 175 | |

**Patentansprüche**

1. Vorrichtung zur Funkenerosionsbearbeitung mindestens eines Rohlings (12;22), bei welcher wenigstens eine von einem Erodierdorn (8) getragene Formelektrode (13.1;13.2) mittels einer Senkerodiereinrichtung linear gegen den Rohling (12;22) vorschiebbar ist, wobei der Erodierdorn (8) mit der Formelektrode (13.1;13.2) sowie der Rohling (12;22) in einer mit einer dielektrischen Flüssigkeit gefüllten Wanne (1.3;1.3′) angeordnet ist, gekennzeichnet durch folgende Merkmale:

a) in die Wanne (1.3, 1.3′) ist ein Magazin (3) lös- und fixierbar eingesetzt;

a1) das Magazin (3) besitzt einen Rohlingsträger (3.2, 3.2′), in welchen achsparallel mehrere Rohlinge (12, 22) lösbar eingespannt sind;

a2) in einem zum Rohlingsträger (3.2, 3.2′) parallel verlaufenden Elektrodenträger (13.11 bzw. 13.12) sind der Anzahl der Rohlinge (12, 22) entsprechende Erodierdorne (8) mit Formelektroden (13.1, 13.2) axial gegen die jeweiligen Rohlinge (12, 22) verschiebbar gelagert;

b) oberhalb der Wanne (1.3, 1.3′) ist der Vorschubmechanismus (6, 6.1, 7, 15) der Senkerodiereinrichtung angeordnet, dessen Vorschubbewegung mit wenigstens einem in die dielektrische Flüssigkeit (5) eintauchenden, auf die Erodierdorne (8) wirkenden Antriebs- und Kontakthebel (4.1, 4.2) übertragen wird;

c) der Vorschubmechanismus mit dem Antriebs- und Kontakthebel (4.1, 4.2) ist gegenüber der Wanne

**4**

(1.3, 1.3') derart verschiebbar, daß die Erodierdorne (8) mit den Elektroden (13.1, 13.2) jeweils nacheinander mittels derselben Senkerodiereinrichtung betätigbar sind.

2. Vorrichtung nach Anspruch 1, dadurch gekennzeichnet, daß das Rohlingsmagazin (3) zwei beidseitig des Rohlingsträges (3.2, 3.2') angeordnete Elektrodenträger (3.11, 3.12) mit in diesem gegen die Rohlinge (12, 22) und damit gegeneinander verschiebbaren Erodierdornen (8) mit Formelektroden (13.1, 13.2) aufweist und daß der Vorschubmechanismus (6, 6.1, 7, 15) der Senkerodiereinrichtung zwei auf die jeweils paarweise angeordneten Erodierdorne (8) und gegeneinander wirkende Antriebs- und Kontakthebel (4.1, 4.2) besitzt.

3. Vorrichtung nach Anspruch 1 oder 2, dadurch gekennzeichnet, daß der Rohlingsträger aus einer Leiste (3.2, 3.2') mit einer Reihe von senkrecht zur Längserstreckung der Leiste (3.2, 3.2') angeordneten Querbohrungen (3.21) besteht, in welche vorzugsweise die im wesentlichen zylindrisch ausgebildeten Rohlinge (12, 12') einsetzbar sind, die jeweils mit einer Schraube (14, 14') oder dgl. bezüglich des Rohlingsträgers (3.2, 3.2') festlegbar sind.

4. Vorrichtung nach Anspruch 3, dadurch gekennzeichnet, daß die Querbohrungen (3.2') die Leiste (3.2) vollständig derart durchsetzen, daß die in diese eingesetzten Rohlinge (12) gleichzeitig von beiden Seiten bearbeitbar sind, wobei die Rohlinge (12) radial abstehende, vorzugsweise diametral einander gegenüberliegende Schwerter (12.1) aufweisen, welche in diesen entsprechende Schlitze (3.22) im Rohlingsträger (3.2) eingreifen, und wobei die Befestigungsschraube (14) mit ihrer Stirnfläche auf einem Teil der Stirnfläche eines der Schwerter (12.1) aufliegt und die Formelektrode derart bemessen und mit in Form von Kerben (13.21, 13.22) ausgebildeten Einschnitten versehen ist, daß das aus dem Rohling (12) erstellte Fertigteil (12') im Rohlingsträger (3.2) mit Hilfe von aus den Schwertern (12.1) erzeugten Stegen (12.1') und der Befestigungsschraube (14) gehalten wird.

5. Vorrichtung nach Anspruch 3, dadurch gekennzeichnet, daß beidseitig der Leiste Querbohrungen oder die Leiste (3.2') vollständig durchsetzende Querbohrungen (3.21') vorgesehen sind, in welche von beiden Seiten her Rohlinge (22) einsetzbar und mit jeweils einer Schraube (14') befestigbar sind, und daß derart von dem Rohlingsträger (3.2') gehaltene Rohlingspaare (22) gleichzeitig mit einem Paar gegeneinander verfahrbarer Formelektroden (13.1, 13.2 in Figur 4) bearbeitbar sind.

6. Vorrichtung nach einem der Ansprüche 1 bis 5, dadurch gekennzeichnet, daß der Elektrodenträger aus einer parallel zum Rohlingsträger (3.2, 3.2') verlaufenden Leiste (3.11, 3.12) mit Lagerbuchsen (11) besteht, in welchen die Erodierdorne (8) axial verschiebbar gelagert sind, wobei zwischen den Lagerbuchsen (11) und an den freien Enden der Erodierdorne (8) angebrachten Scheiben (10) Rückstellfedern (9) eingespannt sind.

7. Vorrichtung nach Anspruch 6, dadurch gekennzeichnet, daß das Rohlingsmagazin (3) aus einem Rohlingsträger (3.2, 3.2') und mindestens einem Elektrodenträger (3.11, 3.12) besteht, welche mit Querträgern (3.13, 3.14) miteinander verbunden und zu einem geschlossenen Rahmen ergänzt sind, der lös- und fixierbar an der vorzugsweise im Grundgestell (1) vorgesehenen Wanne ( 1.3, 1.3') befestigt ist.

8. Vorrichtung nach einem der Ansprüche 1 bis 7, dadurch gekennzeichnet, daß die Antriebs- und Kontakthebel (4.1, 4.2) mit Spindelmuttern (4.11, 4.21) auf einer parallel zur Vorschubrichtung der Erodierdorne (8) verlaufenden, motorisch angetriebenen Gewindespindel (7) parallel verschiebbar angeordnet sind.

9. Vorrichtung nach Anspruch 8, dadurch gekennzeichnet, daß die Gewindespindel (7) zwei gegenläufige Gewindegänge (7.1, 7.2) besitzt, auf welchen jeweils ein Antriebsund Kontakthebel (4.1, 4.2) mit seiner Spindelmutter (4.11, 4.21) parallel verschiebbar angeordnet ist.

10. Vorrichtung nach Anspruch 8 oder 9, dadurch gekennzeichnet, daß mindestens ein Antriebs- und Kontakthebel (4.1) über ein Drehgelenk (4.14) mit einem Armoberteil (4.15), das mit seiner Spindelmutter (4.11) auf der Gewindespindel (7) sitzt, schwenkbar verbunden ist und unter der Wirkung einer vorgespannten Feder, vorzugsweise einer Blattfeder (4.17), derart an einem Anschlag (4.16) anliegt, daß beim regulären Vorschub der Formelektroden (13.1, 13.2) der Antriebs- und Kontakthebel (4.1) mit dem Armoberteil (4.15) starr verbunden ist, dagegen bei Erreichen der Endlage, insbesondere wenn die beiden Formelektroden (13.1, 13.2) mit ihren Stirnseiten aneinander anliegen, entgegen der Vorschubrichtung ausgelenkt wird, wodurch mittels eines in Nachbarschaft des Antriebs- und Kontakthebel (4.1) angeordneten Sensors (4.18) ein die Bewegungsumkehr der Antriebs- und Kontaktarme (4.15, 4.2) bewirkendes Signal erzeugt wird.

11. Vorrichtung nach einem der Ansprüche 1 bis 4, dadurch gekennzeichnet, daß die Antriebs- und Kontakthebel (4.1, 4.2) an ihren den Erodierdornen (8) zugeordneten Seiten Kontaktnippel (4.13, 4.23) aufweisen, welche gegenüber den Antriebs- und Kontakthebeln (4.1, 4.2) elektrisch isoliert sind, mit der Elektronik der Senkerodiereinrichtung über Anschlußdrähte (4.12, 4.22) verbunden sind und der Zuleitung des Erodierstromes zu den Erodierdornen (8) dienen.

12. Vorrichtung nach einem der Ansprüche 1 bis 11, dadurch gekennzeichnet, daß der Vorschubmechanismus (6, 6.1, 7, 15) in einem Portal (2, 2') angeordnet ist, das verschiebbar mit Rollen (2.11) auf seitlich an dem die Wanne (1.3, 1.3') aufweisenden Grundgestell (1, 1') gelagert ist.

13. Vorrichtung nach Anspruch 12, dadurch gekennzeichnet, daß am Grundgestell (1, 1') parallel zum Rohlingsträger (3.2, 3.2') verlaufende Zahnstangen (1.2, 1.2') angeordnet sind, in welche ein Motorritzel (16.1) eines mit dem Portal (2, 2') verbundenen Antriebsmotors (16) eingreift.

14. Vorrichtung nach einem der Ansprüche 1 bis 13, dadurch gekennzeichnet, daß den Erodierdornen (8) Kodierelemente, z.B. Kodierstifte, zugeordnet sind, welche an den Elektrodenträgern (3.11, 3.12) des Magazins (3) und/oder am Grundgestell (1) in Nachbarschaft der Führungselemente (1.1) angeordnet und zur Steuerung des Antriebs mit Sensoren abtastbar sind.

## Claims

1. A device for the spark erosion processing of at least one blank (12; 22), wherein at least one shaping electrode (13.1; 13.2) borne by an erosion mandrel (8) can be fed linearly towards the blank (12; 22) by means of a countersunk erosion device, the erosion mandrel (8) with the shaping electrode (13.1; 11.2) and also the blank (12; 22) being disposed in a trough (1.3; 1.3') filled with a dielectric fluid, characterized by the following features:
   a) a magazine (3) is inserterd releasably and fixably into the tans (1.3, 1.3');
   a1) the magazine (3) has a blank carrier (3.2, 3.2') in which a number of blanks (12, 22) are releasably clamped axis-parallel;
   a2) in an electrode carrier (13.11; 13.12) extending parallel with the blank carrier (3.2, 3.2') erosion mandrels (8) with shaping electrodes (13.1, 1.32) corresponding to the number of blanks (12, 22) are mounted for axial displacement towards the associated blanks (12, 22);
   b) disposed above the trough (1.3, 1.3') is the feed mechanism (6, 6.1, 7, 15) of the countersunk erosion device, whose feed movement is transmitted by at least one driving and contact lever (4.1, 4.2) which is immersed in the dielectric fluid (5) and which acts on the erosion mandrels (8);
   c) the feed mechanism with the driving and contact lever (4.1, 4.2) can be so displaced in relation to the trough (1.3, 1.3') that the erosion mandrels (8) with the electrodes (13.1, 13.2) cam each be actuated in succession by means of the same countersunk erosion device.

2. A device according to claim 1, characterized in that the blank magazine (3) has two electrode carriers (3.11, 3.12) which are disposed on both sides of the blank carrier (3.2, 3.2') and which have erosion mandrels (8) with shaping electrodes (13.1, 13.2) displaceable therein towards the blanks (12, 22) and therefore towards one another, and the feed mechanism (6, 6.1, 7, 15) of the countersunk erosion device has two driving and contact levers (4.1, 4.2) acting on the erosion mandrels (8) disposed in pairs and acting towards one another.

3. A device according to claims 1 or 2, characterized in that the blank carrier comprises a strip (3.2, 3.2') having a number of transverse bores (3.21) which are disposed perpendicularly to the longitudinal extension of the strip (3.2, 3.2') and into which preferably the substantially cylindrical blanks (12, 12') can be inserted and each fixed by means of a screw (14, 14') or the like in relation to the blank carrier (3.2, 3.2').

4. A device according to claim 3, characterized in that the transverse bores (3.2') extend completely through the strip (3.2), so that the blanks (12) inserted thereinto can be processed simultaneously from both sides, the blanks (12) having preferably diametrically opposite, radially projecting blades (12.1) which engage in matching slots (3.22) in the blank carrier (3.2,) the fastening screw (14) bearing via its end face against a portion of the end face of one of the blades (12.1), and the shaping electrode is of such dimensions and so formed with incisions in the form of notches (13.21, 13.22) that the finished part (12′) produced from the blank (12) is retained in the blank carrier (3.2) by means of webs (12.1′) produced by the blades (12.1) and the attaching screw (14).

5. A device according to claim 3, characterized in that transverse bores, or transverse bores (3.21′) extending completely through the strip (3.2′) are provided on both sides of the strip, blanks (22) being insertable into said bores from both sides and each being attachable by means of a screw (14′), and pairs of blanks (22) thus retained by the blank carrier (3.2′) can be processed simultaneously by a pair of shaping electrodes (13.1, 13.2 in Fig. 4) which can be moved towards one another.

6. A device according to one of claims 1 to 5, characterized in that the electrode carrier comprises a strip (3.11, 3.12) extending parallel with the blank carrier (3.2, 3.2′) and having bearing bushes (11) in which the erosion mandrels (8) are mounted for axial displacement, return springs (19) being clamped between the bearing bushes (11) and discs (10) disposed at the free ends of the erosion mandrels (8).

7. A device according to claim 6, characterized in that the blank magazine (3) comprises a blank carrier (3.2, 3.2′) and at least one electrode carrier (3.11, 3.12) which are interconnected via transverse carriers (3.13, 3.14) and supplemented to form a closed frame which is attached releasably and fixably to the trough (1.3, 1.3′) with which the base frame (1) is preferably formed.

8. A device according to one of claims 1 to 7, characterized in that the driving and contact levers (4.1, 4.2) are disposed for displacement in parallel via spindle nuts (4.11, 4.21) on a motor-driven threaded spindle (7) extending parallel with the feed direction of the erosion mandrels (8).

9. A device according to claim 8, characterized in that the threaded spindle (7) has two oppositely directed threads (7.1, 7.2) on each of which a driving and contact lever (4.1, 4.2) is Disposed for parallel displacement via its spindle nut (4.11, 4.21).

10. A device according to claims 8 or 9, characterized in that at least one driving and contact lever (4.1) is pivotably connected via a hinge (4.14) to an arm upper part (4.15) disposed via its spindle nut (4.11) on the threaded spindle (7), said driving and contact lever preferably so bearing under the force of a prestressed spring, preferably a leaf spring (4.17) against a stop (4.16) that in the regular feed of the shaping electrodes (13.1, 13.2) the driving and contact lever (4.1) is rigidly connected to the arm upper part (4.15), whereas when the end position is reached, more particularly when the two shaping electrodes (13.1, 13.2) bear against one another via their end faces, it is deflected against the direction of feed, as a result of which a signal producing the reversal of movement of the drive and contact arms (4.15, 4.2) is generated by means of a sensor (4.18) disposed adjacent the driving and contact lever (4.1).

11. A device according to one of claims 1 to 4, characterized in that on their sides associated with the erosion mandrels (8), the driving and contact levers (4.1, 4.2) have contact nipples (4.13, 4.23) which are electrically insulated against the driving and contact levers (4.1, 4.2) and which are connected via connecting wires (4.12, 4.22) to the electronic system of the countersunk erosion device and which are used for supplying the erosion current to the erosion mandrels (8).

12. A device according to one of claims 1 to 11, characterized in that the feed mechanism (6, 6.1, 7, 15) is disposed in a portal (2, 2′) which is counted for displacement via rollers (2.11) on the side of the base frame (1, 1′) having the trough (1.3, 1.3′).

13. A device according to claim 12, characterized in that disposed on the base frame (1, 1′) are racks (1.2, 1.2′) which extend parallel with the blank carrier (3.2, 3.2′) and in which a pinion (16.1) of a driving motor (16) connected to the portal (2, 2′) engages.

14. A device according to one of claims 1 to 13, characterized in that associated with the erosion mandrels (8) are coding elements, for example, coding pins, which are disposed on the electrode carriers (3.11, 3.12) of the magazine (3) and/or on the base frame (1) adjacent the guide elements (1.1) and which can be scanned by sensors to control the drive.

## Revendications

1. Dispositif d'usinage par étincelage d'au moins une ébauche (12; 22), pour lequel au moins une électrode de formage (13.1; 13.2) portée par un mandrin d'érosion (8) peut avancer linéairement contre à l'ébauche (12; 22), au moyen d'un dispositif de creusement par érosion, étant entendu que le mandrin d'érosion (8) de l'électrode de formage (13.1; 13.2), ainsi que l'ébauche (12; 22), sont disposés dans une cuvette (1.3; 1.3′) remplie d'un liquide diélectrique,

   caractérisé par les caractéristiques suivantes:

   a) un magasin (3), fixe et démontable, est installé dans la cuvette (1.3; 1.3′);

   a1) le magasin (3) possède un support d'ébauches (3.2; 3.2′) dans lequel sont mises en serrage, de façon démontable, plusieurs ébauches (12; 22), ayant leurs axes parallèles;

   a2) dans un support d'électrode (respectivement 13.11, ou 13.12), dirigé parallèlement au support d'ébauche (3.2; 3.2′), sont stockées, de façon à pouvoir se déplacer axialement contre chacune des ébauches (12, 22) concernées, des broches d'érosion (8), comportant des électrodes de formage (13.1, 13.2) correspondant au nombre des ébauches (12, 22);

   b) au dessus de la cuvette (1.3, 1.3′), est disposé le mécanisme d'avance (6, 6.1, 7, 15) du dispositif de creusement par érosion, dont le mouvement d'avance est transmis avec au moins un levier d'entraînement et de contact (4.1, 4.2) agissant sur les broches d'érosion (8) en plongeant dans le liquide diélectrique (5);

   c) le mécanisme d'avance peut être déplacé avec le levier d'entraînement et de contact (4.1, 4.2) par rapport à la cuvette (1.3; 1.3′) de telle façon que les broches d'érosion (8), avec les électrodes (13.1, 1.3′), peuvent être actionnées chacune les unes après les autres au moyen du même dispositif de creusement par érosion.

2. Dispositif suivant la revendication 1, caractérisé en ce que le magasin d'ébauches (3) présente deux supports d'électrodes (3.11, 3.12) disposés des deux côtés du support d'ébauches (3.2, 3.2′) et, comportant, dans celui-ci, des broches d'érosion (8), avec des électrodes (13.1, 13.2), que l'on peut faire déplacer contre les ébauches (12, 22) et, donc, l'une vers l'autre, et en ce que le mécanisme d'avance (6, 6.1, 7, 15) du dispositif de creusement par érosion possède deux leviers d'entraînement et de contact (4.1, 4.2) agissant en sens opposé sur les broches d'érosion (8) disposées chacune par paire.

3. Dispositif suivant la revendication 1 ou la revendication 2, caractérisé en ce que le support d'ébauche est constitué d'un barreau (3.2, 3.2′) comportant une série d'alésages transversaux (3.21) disposés perpendiculairement à à la direction longitudinale du barreau (3.2, 3.2′), alésages dans lesquels peuvent être placées les ébauches (12, 22), réalisés essentiellement de forme cylindrique, qui peuvent être chacune fixées au support d'ébauches (3.2, 3.2′) avec une vis (14,14′) ou similaire.

4. Dispositif suivant la revendication 3, caractérisé en ce que les alésages transversaux (3.2′) traversent complètement le barreau (3.2), de telle façon que les ébauches (12) placés dans ceux-ci peuvent être usinées simultanément des deux côtés, étant entendu que les ébauches (12) présentent des ailettes de maintien (12.1) disposées radialement, de préférence diamétralement opposées l'une par rapport à l'autre, ces ailettes faisant prise dans des rainures (3.22) qui leur correspondent dans le support d'ébauches (3.2), et étant entendu que la vis de fixation (14) s'appuie avec sa surfacé d'extrémité sur une partir de la surface d'extrémité de l'une des ailettes (12.1) et que l'électrode de forme est dimensionnée de telle façon, et est munie d'incisions réalisées sous la forme d'encoches (13.21, 13.22) de telle façon, que la partie terminée (12′) réalisée dans l'ébauche (12) est maintenue dans le support d'ébauches (3.2) au moyen de nervures (12.1′) réalisées dans les ailettes (12.1) et au moyen de la vis de fixation (14).

5. Dispositif suivant la revendication 3, caractérisé en ce que sont prévus des alésages transversaux des deux côtés du barreau, ou des alésages transversaux (3.21′) traversant complètement le barreau (3.2′), alésages dans lesquels on peut placer, à partir de chaque côté, des ébauches (22) et les fixer chacun avec une vis (14′), et en ce que des paires d'ébauches (22) maintenues de cette façon par le support d'ébauches (3.2′) peuvent être usinées simultanément avec une paire d'électrodes de forme (13.1, 13.2, sur la figure 4) pouvant se déplacer l'une vers l'autre.

6. Dispositif suivant l'une quelconque des revendications 1 à 5, caractérisé en ce que le support d'électrodes est constitué d'un barreau (3.11, 3.12) orienté parallèlement au support d'ébauches (3.2, 3.2′), comportant des douilles de positionnement (11), dans lesquelles les broches d'érosion (8) sont montées de façon à pouvoir coulisser axialement, étant entendu qu'entre les douilles de positionnement (11) et des rondelles (10) disposées à l'extrémité libre des broches d'érosion (8), des ressorts de rappel (9) sont mis en serrage.

7. Dispositif suivant la revendication 6, caractérisé en ce que le magasin d'ébauches (3) est constitué d'un support d'ébauches (3.2; 3.2′) et d'au moins un support d'électrodes (3.11, 3.12), lesquels sont reliés entre eux par des supports transversaux (3.13, 3.14) et sont prolongés par un cadre fermé qui est fixé de façon démontable à la cuvette (1.3; 1.3′) prévue, de préférence, dans le châssis principal (1).

8. Dispositif suivant l'une quelconque des revendications 1 à 7, caractérisé en ce que les leviers d'entraînement et de contact (4.1, 4.2), comportant des écrous de broche (4.11, 4.21), sont disposés de façon à pouvoir coulisser parallèlement, sur une broche filetée (7) motorisée, dirigée parallèlement à la direction d'avance des broches d'érosion (8).

9. Dispositif suivant la revendication 8, caractérisé en ce que la broche filetée (7) possède deux pas de filetage de sens opposé (7.1, 7.2), sur chacun desquels est placé, de façon à pouvoir coulisser parallèlement, un levier d'entraînement et de contact (4.1, 4.2), avec ses écrous de broche (4.11, 4.21).

10. Dispositif suivant la revendication 8 ou la revendication 9, caractérisé en ce qu'au moins un levier d'entraînement et de contact (4.1) est, par l'intermédiaire d'une articulation tournante (4.14), relié, de façon à pouvoir pivoter, à une partie supérieure du bras (4.15), qui repose avec son écrou de broche (4.11) sur la broche filetée (7) et qui, sous l'effet d'un ressort en tension, de préférence un ressort à lame (4.17), vient s'appuyer contre une butée (4.16) de telle façon que, lors de l'avance régulière des électrodes de forme (13.1, 13.2), le levier d'entraînement et de contact (4.1) est relié de façon rigide à la partie supérieure du bras (4.15), et que, par contre, lorsqu'on a atteint la position finale, en particulier quand les deux électrodes de forme (13.1, 13.2) sont en contact l'une avec l'autre par leur surfaces frontales, on fait pivoter en sens contraire le dispositif d'avance, ce qui crée, au moyen d'un capteur (4.18), disposé au voisinage du levier d'entraînement et de contact (4.1), un signal provoquant l'inversion du mouvement des bras d'entraînement et de contact (4.15, 4.2).

11. Dispositif suivant l'une quelconque des revendications 1 à 4, caractérisé en ce que les leviers d'entraînement et de contact (4.1, 4.2) présentent, sur leur côté tourné vers les broches d'érosion (8), des boutons de contact (4.13, 4.23), qui sont isolés électriquement par rapport aux leviers d'entraînement et de contact (4.1, 4.2), qui sont reliés, par l'intermédiaire de fils de raccordement (4.12, 4.22), avec l'électronique de l'installation de creusement par érosion et qui servent d'arrivée pour le courant d'érosion vers les broches d'érosion (8).

12. Dispositif suivant l'une quelconque des revendications 1 à 11, caractérisé en ce que le mécanisme d'avance (6, 6.1, 7, 15) est disposé dans un portique (2, 2′) monté de façon à pouvoir coulisser, avec des galets (2.11), latéralement sur le châssis principal (1, 1′) présentant la cuvette (1.3; 1.3′).

13. Dispositif suivant la revendication 12, caractérisé en ce que, sur le châssis principal (1, 1′), sont disposées, parallèlement au support d'ébauches (3.2, 3.2′), des crémaillères (1.2, 1.2′) dans lesquelles engrène un pignon moteur (16.1) d'un moteur d'entraînement (16) relié au portique (2, 2′).

14. Dispositif suivant l'une quelconque des revendications 1 à 13, caractérisé en ce qu'aux broches d'érosion (8) sont associés des organes de codage, par exemple des doigts de codage, qui sont disposés sur les supports d'électrodes (3.11, 3.12) du magasin (3) et/ou sur le châssis principal (1), au voisinage des organes de guidage (1.1) et qui peuvent être palpés par des capteurs pour commander l'entraînement.

Fig. 1

Fig. 2

EP 0 391 446 B1

Fig. 3

EP 0 391 446 B1

Fig. 4

Fig. 5

Fig. 5A

EP 0 391 446 B1

Fig. 6

Fig. 6 A

13.2

14

3.2

13.21

12.1

13.22

Fig. 7

12

3.2

14

Fig. 8

14

3.2

12.1'

12'

12.1'.

Fig. 9